# EUROPÄISCHE PATENTSCHRIFT

(11) **EP 2 017 511 B1**
(45) Veröffentlichungstag und Bekanntmachung des Hinweises auf die Patenterteilung: **12.03.2014**
(21) Anmeldenummer: 08001676.9
(22) Anmeldetag: 30.01.2008
(51) Int. Cl.: F16K 31/00

(54) **Piezoelektrisches Ventil**
Piezo-electric valve
Soupape piézoélectrique

(30) Priorität: 19.07.2007 DE 102007033529
(43) Veröffentlichungstag der Anmeldung: 21.01.2009
(73) Patentinhaber: Hoerbiger Automatisierungstechnik Holding GmbH, 86972 Altenstadt (DE)
(72) Erfinder: Schaible, Jochen , Dr., 72213 Altensteig (DE); Grödl, Marcus, 87640 Altdorf (DE)
(74) Vertreter: Grättinger Möhring von Poschinger Patentanwälte Partnerschaft

(56) Entgegenhaltungen:
- EP-A- 0 943 812
- DE-C1- 19 957 959

## Beschreibung

Die vorliegende Erfindung betrifft ein piezoelektrisches Ventil mit einem Gehäuse, welches einen durchströmbaren Innenraum aufweist, in den mindestens eine mit einem zugeordneten Anschluss für das Strömungsmedium kommunizierende Düse mündet, wobei in dem Innenraum des Gehäuses ein durch elektrische Beaufschlagung verformbares piezoelektrisches Biegeelement dergestalt aufgenommen ist, dass die Düse durch einen aufgrund der Verformung des Biegeelements relativ zu der Düse bewegbaren Abschnitt des Biegelements verschließbar ist, und das Biegelement zumindest in seinem der Düse gegenüberliegenden Bereich eine Auflage aus einem elastisch nachgiebigen Material aufweist.

Piezoelektrische Ventile sind in vielfältigen Ausgestaltungen bekannt, beispielsweise aus der DE 2511752 A1, der DE 3400645 A1, der DE 3527069 A1, der EP 0404082 B1 der EP 0538236 A1, der DE 4320909 Cl, der DE 4410153 C1, der WO 97/09555 A1, der DE 19547149 A1, der EP 0191011 B1 und der EP 0565510 B1. Gattungsgemäße piezoelektrische Ventile, bei denen im Hinblick auf eine möglichst geringe Leckage in der Schließstellung das piezoelektrische Biegeelement zumindest in seinem der Düse gegenüberliegenden Bereich eine Auflage aus einem elastisch nachgiebigen Material aufweist, sind insbesondere in der EP 0907852 B1 und der EP 0943812 A1 beschrieben. Nach der an erster Stelle genannten EP 0907852 B1 ist dabei die Auflage aus einem elastisch nachgiebigen Material als eine auf dem Biegeelement lokal angebrachte, beispielsweise aus Fluorosilikon bestehende Elastomerscheibe ausgeführt. Nach der EP 0943812 A1 ist auf den frei beweglichen, außerhalb der Einspannung liegenden Bereich des piezoelektrischen Biegeelements ein "relativ dünnwandiger" Überzug aus einem Elastomer aufgebracht, der endseitig einen Dichtwulst aufweist, welcher für eine Abdichtung des Innenraums des Gehäuses nach außen sorgt.

Die hohe Schaltdynamik piezoelektrischer Ventile lässt diese als besonders günstig für eine Vielzahl von Anwendungen erscheinen. Allerdings setzt die charakteristische Kraft-Weg-Kennlinie des Biegewandlers (vgl. insoweit insbesondere die DE 4410153 C1) der Anwendung von piezoelektrischen Ventilen gewisse Grenzen, weil die mögliche Schließkraft mit zunehmender Auslenkung abnimmt. Hierdurch wird typischerweise die durch das piezoelektrische Ventil zu schaltende fluidische Leistung, welche proportional ist zu dem Produkt aus zu schaltendem Durchfluss und zu schaltendem Druckgefälle, begrenzt.

Der vorliegenden Patentanmeldung liegt demgemäß die Aufgabe zugrunde, ein piezoelektrisches Ventil der eingangs angegebenen Art bereitzustellen, mit welchem sich - unter Beibehaltung der bekannten Vorteile wie insbesondere der hohen Schaltdynamik - in der Praxis höhere Schaltleistungen erreichen lassen als mit bekannten gattungsgemäßen piezoelektrischen Ventilen.

Auf überraschend einfache Weise wird diese Aufgabenstellung gemäß der vorliegenden Erfindung dadurch gelöst, dass die Dicke der aus elastisch nachgiebigem Material bestehenden Auflage des Biegeelements zumindest in dem der Düse gegenüberliegenden Bereich maximal 0,25 mm beträgt, wobei weiterhin die freie Oberfläche der Auflage aus elastisch nachgiebigem Material zumindest in dem der Düse gegenüberliegenden Bereich eine Oberflächengüte mit einer Rz von maximal 16 µm aufweist und die Härte des die Auflage bildenden elastisch nachgiebigen Materials 50-90 Shore A beträgt. Hierdurch ergibt sich in Kombination mit der erfindungsgemäßen Dicke der elastisch nachgiebigen Auflage des Biegeelements ein besonders günstiges Abdichtverhalten des Ventils. Besonders bevorzugt beträgt die Härte der Auflage 60-75 Shore A.

Besonders bevorzugt beträgt die Dicke der Auflage aus elastisch nachgiebigem Material in dem genannten Bereich sogar maximal bzw. weniger als 0,2 mm.

Die vorliegende Erfindung nutzt dabei die Erkenntnis, dass im Falle der erfindungsgemäßen Ausführung der elastisch nachgiebigen Auflage des piezoelektrischen Biegeelements mit einer Dicke von maximal 0,25 mm, besonders bevorzugt maximal 0,2 mm jener Anteil der Auslenkung des Biegeelements, welcher zu einer für das leckagefreie Verschließen der Düse mittels des Biegeelements wesentlichen Kompression der elastisch nachgiebigen Auflage verantwortlich ist, auf ein Minimum reduzieren lässt. Diese Minimierung des ineffizienten Leerhubs des Biegeelements (Biegewandlers) wirkt sich in zweifacher Weise vorteilhaft aus, nämlich zu einen dahingehend, dass der effektive Arbeitshub des Biegeelements vergrößert werden kann, so dass das Biegeelement in der Öffnungsstellung des Ventils entsprechend weiter von der Düse abheben kann, als dies nach dem Stand der Technik möglich ist, wodurch der ungehinderte, verlustfreie Durchfluss durch das Ventil in dessen Öffnungsstellung begünstigt wird; der zweite vorteilhafte Effekt besteht in einer höheren zur Verfügung stehenden Schließkraft und somit einer gesteigerten Zuverlässigkeit des leckagefreien Verschließens der Düse auch bei gesteigerten Drücken, weil der für die Kompression der elastisch nachgiebigen Auflage zum Verschließen der Düse erforderliche Hub gegenüber dem Stand der Technik reduziert ist, womit - aufgrund der charakteristischen Kraft-Weg-Kennlinie von piezoelektrischen Biegeelementen - die Düse bereits bei einem Betriebspunkt mit geringerer Auslenkung des Biegeelements und somit höherer Anlagekraft zuverlässig verschlossen ist.

Mit besonderem Vorteil läßt sich die vorliegende Erfindung bei 3/2-Wege Schaltventilen einsetzen, bei denen zwei einander auf unterschiedlichen Seiten des Biegewandlers gegenüberliegende, jeweils mit einem zugeordneten Anschluss kommunizierende Düsen in das Innere des Gehäuses münden, wobei der Biegewandler in jeder seiner beiden Endstellungen (maximale Auslenkung) eine der beiden Düsen verschließt; denn bei solchen Ventilen ist die einleitend dargelegte, durch die vorliegende Erfindung gelöste Problematik der mit zunehmender Auslenkung nachlassenden Schließkraft besonders ausgeprägt. Indessen ist die vorliegende Erfindung keinesfalls auf derartige 3/2-Wege Schaltventile beschränkt. Sie läßt sich vielmehr mit Vorteil ersichtlich auch bei einfach wirkenden Schaltventilen wie auch bei Proportionalventilen einsetzen.

Gemäß einer anderen bevorzugten Weiterbildung der vorliegenden Erfindung ist an dem Gehäuse oder einem in dieses eingesetzten Düseneinsatz außerhalb und benachbart zu einer die Mündung der Düse umgebenden ringförmigen Dichtfläche, an der in der Schließstellung des Ventils eine düsenseitige erste Dichtstruktur, die insbesondere stirnseitig an einem ringförmigen Dichtvorsprung vorgesehen sein kann, und eine hierzu korrespondierende biegeelementseitige zweite Dichtstruktur aneinander anliegen, mindestens ein Anschlag vorgesehen, der gegenüber der an ihn angrenzenden Oberfläche des Gehäuses bzw. des Düseneinsatzes vorspringt und in der Schließstellung des Biegeelements die Verformung der zweiten Dichtstruktur im Bereich der Dichtfläche begrenzt. Durch einen entsprechenden Anschlag bzw. entsprechende Anschläge läßt sich gezielt Einfluss nehmen auf die Eindringtiefe des Dichtvorsprungs in die elastisch nachgiebige Auflage des Biegeelements, so dass der Dichtvorsprung besonders scharfkantig und somit die geschlossen ringförmige Dichtfläche besonders schmal ausgeführt sein kann, ohne dass hiermit die Gefahr einer Beschädigung der elastisch nachgiebigen Auflage verbunden wäre. Dies wirkt sich wiederum günstig auf die Schaltdynamik des piezoelektrischen Ventils aus, weil sich durch die entsprechende Minimierung der ringförmigen Dichtfläche der Düse Adhäsionseffekte, welche die Schaltdynamik beeinträchtigen können, reduzieren lassen.

Ebenfalls im Hinblick auf die Schaltdynamik von für pneumatische Anwendungen bestimmten piezoelektrischen Ventilen ist es günstig, wenn sich, gemäß einer wiederum bevorzugten Weiterbildung eines die vorstehend erläuterten Anschläge aufweisenden piezoelektrischen Ventils, der mindestens eine Anschlag um mindestens 0,01 mm gegenüber der ihn umgebenden Oberfläche der Düse, des Düseneinsatzes bzw. des Gehäuses erhebt. Auf diese Weise verbleibt in der Schließstellung des Ventils zwischen der elastisch nachgiebigen Auflage des Biegeelements und der Oberfläche der Düse bzw. des Gehäuses in der Umgebung der Anschläge ein Luftspalt von solcher Dicke, dass keine die Schaltdynamik des Ventils beim Öffnen nachteilig beeinflussenden strömungsdynamischen Effekte auftreten.

Für die Funktion der vorstehend erläuterten Anschläge ist es weiterhin vorteilhaft, wenn die flächenmäßige Summe der in der Schließstellung des Ventils wirksamen Anlageflächen der Anschläge an den zugeordneten Gegenflächen zwischen dem 0,1-fachen und dem 2,0-fachen der Dichtfläche beträgt. Besonders bevorzugt liegt das entsprechende Flächenverhältnis zwischen 0,3 und 1,3. Ideal ist ein Flächenverhältnis zwischen 0,5 und 0,8. Bei einer solchen Gestaltung ergeben sich optimierte Verhältnisse hinsichtlich der das Eindringen des ringförmig geschlossenen Dichtvorsprungs in die Auflage aus nachgiebigem Material begrenzenden Funktion der Anschläge auf der einen Seite und der die Schaltdynamik möglicherweise beeinträchtigenden haftungs- und strömungsdynamischen Effekte im Bereich der auf den Anschlägen aufliegenden Auflage des Biegeelements andererseits. Besonders günstig ist dabei, wenn sich die Summe der wirksamen Anlageflächen der Anschläge auf eine Mehrzahl von Anschlägen aufteilt. In diesem Sinne sind besonders bevorzugt mindestens drei um die Dichtfläche herum angeordnete Anschläge vorgesehen. Die Anschläge sind dabei besonders bevorzugt von dem Dichtvorsprung abgesetzt, freistehend ausgeführt, und zwar wiederum im Hinblick auf besonders günstige strömungsdynamische Verhältnisse beim Öffnen und schließen des Ventils. Zwingend ist dies indessen nicht; vielmehr kommt im Rahmen der vorliegenden Erfindung auch in Betracht, dass der mindestens eine Anschlag an den Dichtvorsprung der Düse, des Düseneinsatzes bzw. des Gehäuses, allein gegenüber dessen maximaler Erhebung über die umgebende Oberfläche zurückgesetzt, angesetzt ist. In diesem Falle ist allerdings, wiederum im Hinblick auf günstige strömungsdynamische Verhältnisse, darauf zu achten, dass mindestens 50% des Umfangs des Dichtvorsprungs der Düse frei ist; der Anteil des Umfangs des Dichtvorsprungs, an welchen Anschläge angeschlossen sind, sollte sich somit, mit anderen Worten, auf maximal 50% beschränken.

Im Folgenden wird die vorliegende Erfindung anhand eines in der Zeichnung veranschaulichten bevorzugten Ausführungsbeispiels näher erläutert. Dabei zeigt
- Fig. 1: ein erfindungsgemäßes piezoelektrisches Ventil im Längsschnitt,

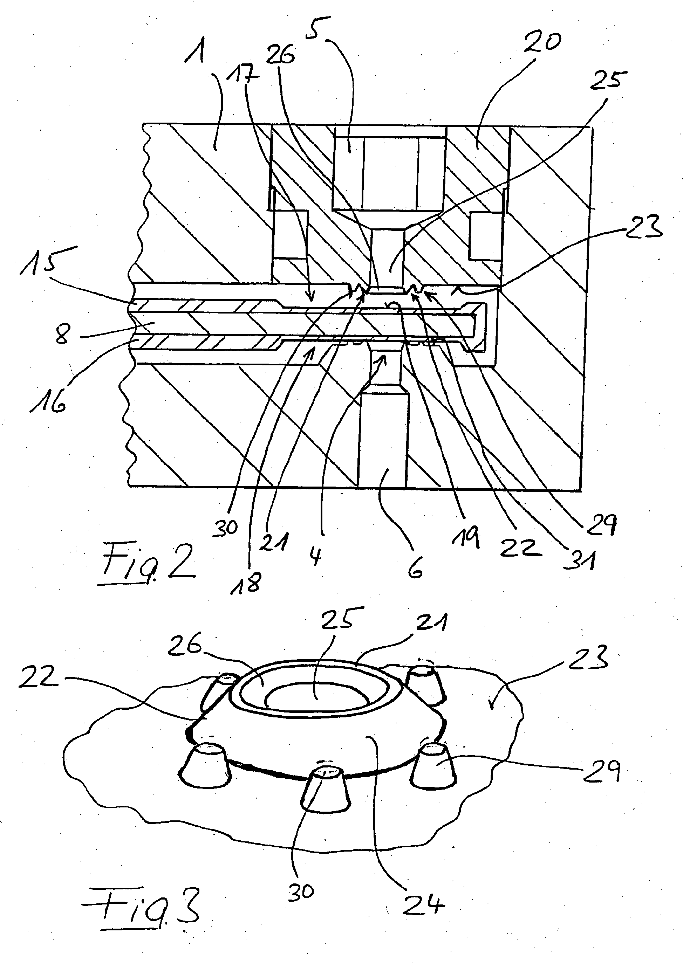

- Fig. 2: das Detail "A" der Fig. 1 in vergrößerter Darstel- lung und
- Fig. 3: in perspektivischer Darstellung die Mündung des Düseneinsatzes des piezoelektrischen Ventils nach Fig. 1 und
- Fig. 4: in einem stark vergrößerten, nicht maßstabsgerech- ten Schnitt die Situation beim Verschließen der in Fig. 3 gezeigten Düsen-/Anschlag-Anordnung mittels eines einen Elastomer-Überzug aufweisenden Biege- elements.

Hinsichtlich seines grundsätzlichen Aufbaus entspricht das Ventil gemäß der in der Zeichnung wiedergegebenen bevorzugten Ausführungsform dem aus der EP 943812 A1 (US 6143744 B1) bekannten Ventil. Es wird daher auf eine eingehende Beschreibung sämtlicher Details und sonstigen Gestaltungsmerkmale des dargestellten Ventils verzichtet und statt dessen, zur Ergänzung der nachstehenden Erläuterung, die genannte Veröffentlichung im vollen Umfang in Bezug genommen.

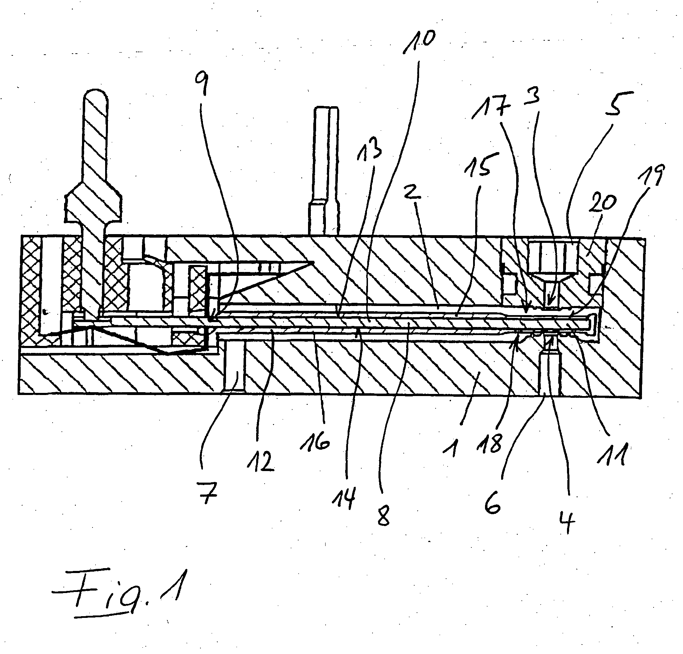

Das in der Zeichnung dargestellte piezoelektrische Ventil umfaßt ein Gehäuse 1, welches einen durchströmbaren Innenraum 2 aufweist. In den Innenraum 2 münden zwei einander gegenüberliegende Düsen 3 und 4, die jeweils mit einem zugeordneten Anschluss 5 bzw. 6 für das Strömungsmedium kommunizieren. Weiterhin mündet in den Innenraum 2 des Gehäuses 1 eine Öffnung 7. In dem Innenraum 2 des Gehäuses 1 ist ein piezoelektrisches Biegeelement 8, welches durch elektrische Beaufschlagung verformbar ist, dergestalt aufgenommen, dass sich jener - in Fig. 1 rechts vom Einspannpunkt 9 liegende - Bereich 10 des Biegeelements, der bei dessen elektrischer Beaufschlagung seine Lage relativ zu dem Gehäuse ändert, mit seinem endseitigen Abschnitt 11 zwischen die beiden Düsen 3 und 4 ragt. Je nach der elektrischen Beaufschlagung kann das Biegeelement 8 somit, in einer ersten bzw. zweiten Schließstellung, die erste Düse 3 oder die zweite Düse 4 verschließen oder aber eine Zwischenstellung, in der beide Düsen geöffnet sind, einnehmen.

In dem frei über den Einspannpunkt 9 auskragenden Bereich 10 ist auf das Biegelement 8 ein aus elastisch nachgiebigem, elastomerem Material bestehender Überzug 12 aufgesetzt, welcher auf der Oberseite 13 und der Unterseite 14 des Biegeelements jeweils eine Auflage 15 bzw. 16 bildet.

Während die Auflagen 15 und 16 entfernt von den Düsen 3 und 4 eine Dicke von etwa 0,5mm und damit in bzw. geringfügig über der bisher verwendeten Größenordnung besitzen, beträgt die Dicke der Auflagen 15 und 16 in den den Düsen gegenüberliegenden Bereichen 17 bzw. 18 und der unmittelbaren Umgebung lediglich 0,2mm. In den Bereichen mit reduzierter Dicke weisen die freien Oberflächen 19 der Auflagen 15 und 16 eine Oberflächengüte mit einer Rz von maximal 16 µm auf; und die Härte der Auflagen 15 und 16 beträgt in den genannten Bereichen zwischen 60 und 75 Shore A.

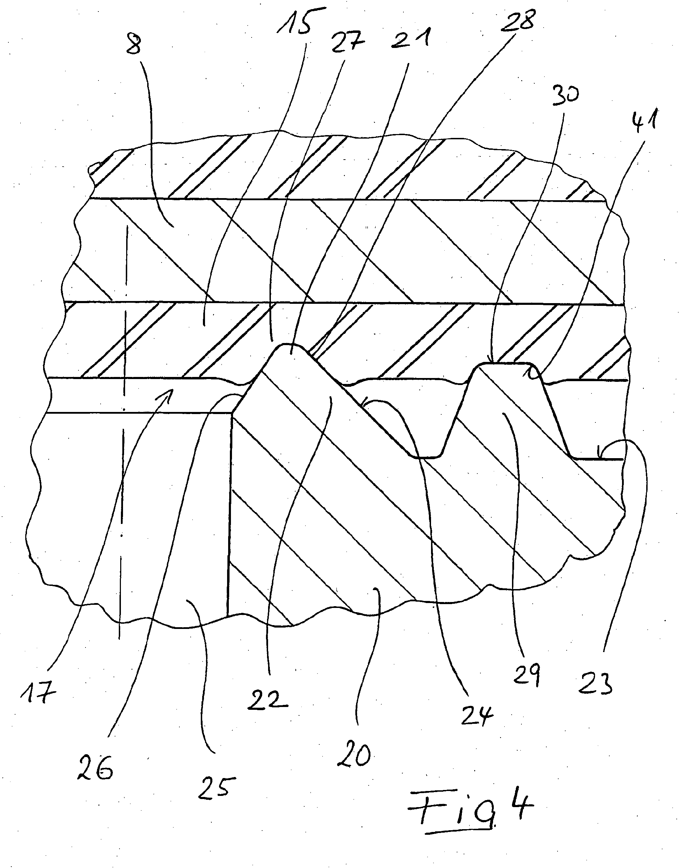

Jede der beiden Düsen 3 und 4 ist, wie dies nachfolgend anhand der an dem in das Gehäuse 1 eingesetzten, die Düse 3 aufweisenden Düseneinsatz 20 erläutert wird, in entsprechender Weise allerdings auch für die Düse 4 gilt, von einer unterbrechungsfrei geschlossenen, ringförmigen ersten Dichtstruktur 21 eingefasst, die stirnseitig an einem Dichtvorsprung 22 vorgesehen ist, der gegenüber der umliegenden Stirnfläche 23 des Düseneinsatzes 20 vorsteht und eine etwa konische Außenfläche 24 aufweist. Die zylindrische Düsenbohrung 25 geht über einen konischen Übergangsbereich 26 in die Dichtstruktur 21 über. In der die Düse 3 verschließenden Schießstellung des Biegeelements 8 (Fig. 4) liegt die an dem Dichtvorsprung 22 angeordnete erste Dichtstruktur 21 an der Auflage 15 in deren Bereich 17 an und dringt geringfügig in die Auflage 15 ein. Auf diese Weise definert sich in dem - entsprechend verformten - Bereich 17 der Auflage 15 eine zu der ersten Dichtstruktur 21 korrespondierende, ringförmig geschlossene zweite Dichtstruktur 27, wobei die erste und die zweite Dichtstruktur längs einer ringförmigen Dichtfläche 28 aneinander anliegen.

An dem Düseneinsatz 20 sind, von dessen Stirnfläche 23 vorspringend, um den Dichtvorsprung 22 herum sechs freistehende, etwa kegelstumpfförmige Anschläge 29 angeordnet. Jeder Anschlag 29 weist stirnseitig eine Anschlagfläche 30 für die Auflage 15 des Biegeelements 8 auf. Die Anschlagflächen 30 sind gegenüber der maximalen Erhebung des Dichtvorsprungs 22 von der Stirnfläche 23 des Düseneinsatzes 20 etwas zurückgesetzt, d.h. die Anschläge 29 stehen etwas weniger weit von der Stirnfläche 23 des Düseneinsatzes vor als der Dichtvorsprung 22. Die Flächensumme jener Flächen, an denen bei der betreffenden Schließstellung des Biegelements 8 die sechs Anschläge 29 mit den entsprechenden Gegenflächen 41 in Kontakt sind, entspricht flächenmäßig etwa 65% der zwischen der ersten Dichtstruktur 21 und der zweiten Dichtstruktur 27 wirksamen Dichtfläche 28.

Entsprechendes gilt, wie dargelegt, für die zweite Düse 4, welche nicht in einem Düseneinsatz, sondern vielmehr direkt im Gehäuse 1 ausgebildet ist. Hier springen die Anschläge 29 in der beschriebenen Weise gegenüber der angrenzenden Oberfläche 31 des Gehäuses vor.

## Patentansprüche

1. Piezoelektrisches Ventil mit einem Gehäuse (1), welches einen durchströmbaren Innenraum (2) aufweist, in den mindestens eine mit einem zugeordneten Anschluss (5; 6) für das Strömungsmedium kommunizierende Düse (3; 4) mündet, wobei
- in dem Innenraum des Gehäuses ein durch elektrische Beaufschlagung verformbares piezoelektrisches Biegeelement (8) dergestalt aufgenommen ist,
- die Düse (3; 4) durch einen aufgrund der Verformung des Biegeelements (8) relativ zu der Düse bewegbaren Abschnitt (11) des Biegelements verschließbar ist, und
- das Biegelement zumindest in seinem der Düse gegenüberliegenden Bereich eine Auflage (15; 16) aus einem elastisch nachgiebigen Material aufweist,
**dadurch gekennzeichnet, dass**
- die Dicke der Auflage (15; 16) aus elastisch nachgiebigem Material in dem der Düse (3; 4) gegenüberliegenden Bereich (17; 18) maximal 0,25 mm beträgt,
- die freie Oberfläche (19) der Auflage (15; 16) aus elastisch nachgiebigem Material in dem der Düse (3; 4) gegenüberliegenden Bereich (17; 18) eine Oberflächengüte mit einer Rz von maximal 16 µm aufweist und
- die Härte des die Auflage (15; 16) bildenden elastisch nachgiebigen Materials in dem der Düse (3; 4) gegenüberliegenden Bereich (17; 18) 50 bis 90 Shore A beträgt.

2. Piezoelektrisches Ventil nach Anspruch 1,
**dadurch gekennzeichnet,**
**dass** die Dicke der Auflage (15; 16) aus elastisch nachgiebigem Material in dem der Düse (3; 4) gegenüberliegenden Bereich (17; 18) maximal 0,2mm beträgt

3. Piezoelektrisches Ventil nach Anspruch 1,
**dadurch gekennzeichnet,**
**dass** die Härte des die Auflage bildenden elastisch nachgiebigen Materials in dem der Düse (3; 4) gegenüberliegenden Bereich (17; 18) 60 bis 75 Shore A beträgt.

4. Piezoelektrisches Ventil nach einem der Ansprüche 1 bis 3,
**dadurch gekennzeichnet,**
**dass** an dem Gehäuse (1) oder einem in dieses eingesetzten Düseneinsatz (20) außerhalb und benachbart zu einer die Mündung der Düse (3; 4) umgebenden ringförmigen Dichtfläche (28), an der in der Schließstellung des Ventils eine düsenseitige erste Dichtstruktur (21) und eine hierzu korrespondierende biegeelementseitige zweite Dichtstruktur (27) aneinander anliegen, mindestens ein Anschlag (29) vorgesehen ist, der gegenüber der an ihn angrenzenden Oberfläche (23; 31) des Gehäuses (1) bzw. des Düseneinsatzes (20) vorspringt und in der Schließstellung des Biegeelements die Verformung der zweiten Dichtstruktur (27) im Bereich der Dichtfläche (28) begrenzt.

5. Piezoelektrisches Ventil nach Anspruch 4,
**dadurch gekennzeichnet,**
**dass** der mindestens eine Anschlag (29) sich um mindestens 0,01 mm gegenüber der angrenzenden Stirnfläche (23) eines Düseneinsatzes (20) bzw. der angrenzenden Oberfläche (31) des Gehäuses (1) erhebt.

6. Piezoelektrisches Ventil nach Anspruch 4 oder Anspruch 5,
**dadurch gekennzeichnet,**
**dass** die flächenmäßige Summe der in der Schließstellung des Ventils wirksamen Anlageflächen der Anschläge (29) an den zugeordneten Gegenflächen (41) zwischen dem 0,1-fachen und dem 2,0-fachen der Dichtfläche (28) beträgt.

7. Piezoelektrisches Ventil nach Anspruch 6,
**dadurch gekennzeichnet,**
**dass** die flächenmäßige Summe der in der Schließstellung des Ventils wirksamen Anlageflächen der Anschläge (29) an den zugeordneten Gegenflächen (41) zwischen dem 0,3-fachen und dem 1,3-fachen der Dichtfläche (28) beträgt.

8. Piezoelektrisches Ventil nach Anspruch 7,
**dadurch gekennzeichnet,**
**dass** die flächenmäßige Summe der in der Schließstellung des Ventils wirksamen Anlageflächen der Anschläge (29) an den zugeordneten Gegenflächen (41) zwischen dem 0,5-flachen und dem 0,8-fachen der Dichtfläche (28) beträgt

9. Piezoelektrisches Ventil nach einem der Ansprüche 4 bis 8,
**dadurch gekennzeichnet,**
**dass** der mindestens eine Anschlag (29) von einem die erste Dichtstruktur (21) aufweisenden Dichtvorsprung (22) abgesetzt, freistehend ausgeführt ist.

## Claims

1. A piezoelectric valve with a housing (1), which has an interior (2), through which it is possible to flow and into which at least one nozzle (3; 4), which communicates with an associated connection (5; 6) for the flow medium, opens, wherein
- a piezoelectric flexural member (8), which can be deformed when acted upon by electricity, is thus accommodated in the interior of the housing,
- the nozzle (3; 4) can be closed by means of a section (11) of the flexural member which can be moved relatively to the nozzle due to the deformation of the flexural member (8), and
- the flexural member has a bearing surface (15; 16) made of an elastically resilient material at least in the region thereof opposite the nozzle,
**characterised in that**
- the thickness of the bearing surface (15; 16) made of an elastically resilient material in the region (17; 18) opposite the nozzle (3; 4) is at most 0.25 mm,
- the exposed surface (19) of the bearing surface (15; 16) made of an elastically resilient material in the region (17; 18) opposite the nozzle (3; 4) has a surface quality with an Rz of at most 16 µm and
- the hardness of the elastically resilient material forming the bearing surface (15; 16) in the region (17; 18) opposite the nozzle (3; 4) is 50 to 90 Shore A.

2. The piezoelectric valve according to Claim 1,
**characterised**
**in that** the thickness of the bearing surface (15; 16) made of an elastically resilient material in the region (17; 18) opposite the nozzle (3; 4) is at most 0.2 mm.

3. The piezoelectric valve according to Claim 1,
**characterised**
**in that** the hardness of the elastically resilient material forming the bearing surface in the region (17; 18) opposite the nozzle (3; 4) is 60 to 75 Shore A.

4. The piezoelectric valve according to one of Claims 1 to 3,
**characterised**
**in that** at the housing (1) or a nozzle insert (20) inserted into the same externally and adjacently to an annular sealing surface (28) surrounding the opening of the nozzle (3; 4), at which in the closed position of the valve a nozzle-side first sealing structure (21) and a second sealing structure (27) corresponding thereto bear against one another, at least one stop (29) is provided, which protrudes with respect to the surface (23; 31) of the housing (1) or the nozzle insert (20) adjoining the same and, in the closed position of the flexural member, delimits the deformation of the second sealing structure (27) in the region of the sealing surface (28).

5. The piezoelectric valve according to Claim 4,
**characterised**
**in that** the at least one stop (29) is raised by at least 0.01 mm with respect to the adjacent end face (23) of a nozzle insert (20) or the adjacent surface (31) of the housing (1).

6. The piezoelectric valve according to Claim 4 or Claim 5,
**characterised**
**in that** the sum of the area of the effective bearing surfaces of the stops (29) against the assigned counter surfaces (41) in the closed position of the valve is between 0.1-times and 2.0-times that of the sealing surface (28).

7. The piezoelectric valve according to Claim 6,
**characterised**
**in that** the sum of the area of the effective bearing surfaces of the stops (29) against the assigned counter surfaces (41) in the closed position of the valve is between 0.3-times and 1.3-times that of the sealing surface (28).

8. The piezoelectric valve according to Claim 7,
**characterised**
**in that** the sum of the area of the effective bearing surfaces of the stops (29) against the assigned counter surfaces (41) in the closed position of the valve is between 0.5-times and 0.8-times that of the sealing surface (28).

9. The piezoelectric valve according to one of Claims 4 to 8,
**characterised**
**in that** the at least one stop (29) is realised in a free-standing manner, offset from a sealing projection (22), which has the first sealing structure (21).

## Revendications

1. Soupape piézoélectrique avec un boîtier (1) qui présente un espace intérieur (2) pouvant être traversé par un flux, dans lequel débouche au moins une buse (3 ; 4) communiquant avec un raccord (5 ; 6) associé pour le fluide d'écoulement, moyennant quoi
- un élément de flexion piézoélectrique (8) pouvant être déformé par une alimentation électrique est logé de manière à ce que
- la buse (3 ; 4) puisse être fermée par une section (11) de l'élément de flexion qui est déplaçable par rapport à la buse en raison de la déformation de l'élément de flexion (8), et
- l'élément de flexion présentant, au moins dans sa zone située en vis-à-vis de la buse, un support (15 ; 16) en un matériau élastique souple,
**caractérisée en ce que**
- l'épaisseur du support (15 ; 16) en un matériau élastique souple est d'un maximum de 0,25 mm dans la zone (17 ; 18) située en vis-à-vis de la buse (3 ; 4),
- la surface libre (19) du support (15 ; 16) en un matériau élastique souple présentant une qualité de surface d'une valeur Rz d'un maximum de 16 µm dans la zone (17 ; 18) située en vis-à-vis de la buse (3 ; 4) et
- la dureté du matériau élastique souple formant le support (15 ; 16) dans la zone (17 ; 18) située en vis-à-vis de la buse (3 ; 4) étant de 50 à 90 Shores A.

2. Soupape piézoélectrique selon la revendication 1,
**caractérisé en ce que**
l'épaisseur du support (15 ; 16) en un matériau élastique souple est de 0,2 mm au maximum dans la zone (17 ; 18) située en vis-à-vis de la buse (3 ; 4).

3. Soupape piézoélectrique selon la revendication 1,
**caractérisée en ce que**
la dureté du matériau élastique souple formant le support dans la zone (17 ; 18) située en vis-à-vis de la buse (3 ; 4) est de 60 à 75 Shores A.

4. Soupape piézoélectrique selon l'une des revendications 1 à 3,
**caractérisée en ce que**
l'on prévoit, sur le boîtier (1) ou sur un insert de buse (20) placé à l'intérieur de celui-ci, à l'extérieur et au voisinage d'une surface d'étanchéité (28) annulaire entourant l'embouchure de la buse (3 ; 4), contre laquelle reposent l'une contre l'autre, dans la position de fermeture de la soupape, une première structure d'étanchéité (21) côté buse et une deuxième structure d'étanchéité (27) en correspondance avec elle côté élément de flexion, au moins une butée (29) qui est en saillie par rapport à la surface (23 ; 31) limitrophe à celle-ci du boîtier (1) ou de l'insert de buse (20) et qui délimite, dans la position de fermeture de l'élément de flexion, la déformation de la deuxième structure d'étanchéité (27) dans la zone de la surface d'étanchéité (28).

5. Soupape piézoélectrique selon la revendication 4,
**caractérisée en ce que**
cette au moins une butée (29) s'élève d'au moins 0,01 mm par rapport à la surface frontale (23) limitrophe d'un insert de buse (20) ou de la surface limitrophe (31) du boîtier (1).

6. Soupape piézoélectrique selon la revendication 4 ou la revendication 5,
**caractérisée en ce que**
la somme surfacique des surfaces de contact efficaces des butées (29), dans la position de fermeture de la soupape, est comprise entre 0,1 fois et 2,0 fois la surface d'étanchéité (28) au niveau des surfaces opposées (41) associées.

7. Soupape piézoélectrique selon la revendication 6,
**caractérisée en ce que**
la somme surfacique des surfaces de contact efficaces des butées (29), dans la position de fermeture de la soupape, est comprise entre 0,3 fois et 1,3 fois la surface d'étanchéité (28) au niveau des surfaces opposées (41) associées.

8. Soupape piézoélectrique selon la revendication 7,
**caractérisée en ce que**
la somme surfacique des surfaces de contact efficaces des butées (29), dans la position de fermeture de la soupape, est comprise entre 0,5 fois et 0,8 fois la surface d'étanchéité (28) au niveau des surfaces opposées (41) associées.

9. Soupape piézoélectrique selon l'une des revendications 4 à 8,
**caractérisée en ce que**
cette au moins une butée (29) est réalisée de manière dégagée, isolée par rapport à une saillie d'étanchéité (22) présentant la première structure d'étanchéité (21).
